# EUROPEAN PATENT APPLICATION

(11) **EP 3 002 922 A1**
(43) Date of publication of application: **06.04.2016**
(21) Application number: 14306531.6
(22) Date of filing: 30.09.2014
(51) Int. Cl.: H04L 29/06

(54) **Method and system for operating a user equipment device in a private network**

(71) Applicant: ALCATEL LUCENT, 92100 Boulogne-Billancourt (FR)
(72) Inventor: Six, Erwin Alfons Constant, 2018 Antwerpen (BE); Bouchat, Christele, 2018 Antwerpen (BE); Justen, Pascal Marie Edouard Julien, 2018 Antwerpen (BE); Henderickx, Wim, 2018 Antwerpen (BE)
(74) Representative: Land, Addick Adrianus Gosling

(57) **Abstract**

Method for operating a user equipment device in a private network by a visiting device from outside the private network, each device being connected via a server gateway to a network function on a common server outside the private network, comprising the steps of:
(i) creating and managing a private network context for both the user equipment device and the visiting device by each respective network function;
(ii) consulting one or more databases defined by the network functions to authenticate the user equipment device and visiting device and subsequently determine whether the user equipment device and visiting device are allowed to join their private contexts; and
if they are allowed to join their private contexts,
(iii) setting up connections between the network functions on the server to join the private contexts of the user equipment device and visiting device and therewith allow interaction between said devices.

## Description

The present invention relates to the field of networking. In particular, it relates to a method and system for operating a user equipment device in a private network by a visiting device from outside the private network.

Nowadays, almost everyone has a personal computer, laptop, tablet and/or mobile phone. These user equipment devices are commonly equipped with hardware for connecting to a computer network, such as a local area network set up at home or at work, also known as a private network.

Private networks are used to create a private network context for groups of predetermined user equipment devices. Such private network context is typically implemented locally, which local private network is then connected to the Internet. In a private network context, users can easily share/retrieve data amongst each other, data can be stored and/or synchronized at the network, network and/or device usages can be controlled, and services such as climate control or TV control can be provided. These and other private network context functionalities are referred to as home services.

Recent developments in the field of networking have led to virtualization of these home services by running them elsewhere, typically on a server in the Web. Advantages of such virtualization are that the locally installed equipment can be much simpler and it allows updating services without needing to update local networking equipment. To avoid extra authentication required from the user equipment devices that use the virtualized services, private networks are emulated on servers in the Web, which servers comprise databases that define the private networks as groups of predetermined user equipment devices. For each user equipment device in the database, a private network context is created, which defines for each device a set of parameters which influence the interaction of each respective device with private content and/or services. The private network context thereby defines the access data required for user equipment devices to have access to content and services belonging to a given private network, therewith ensuring the security of the private network. A user equipment device visiting the private network, e.g. a laptop or mobile phone of someone visiting his/her friend's place, can only either connect to the Internet via a public SSID or get full access to the private network via the Wi-Fi password. It requires more complex access management, however, to share only specific services and/or data, such as pictures or video content from a certain directory, with the visiting user equipment device.

It is an object of the present invention to allow sharing of only specific services and/or data with devices visiting a private network.

To this end, according to the invention, there is provided a method for operating a user equipment device in a private network by a visiting device from outside the private network, each device being connected via a server gateway to a network function on a common server outside the private network, comprising the steps of:
(i) creating and managing a private network context for both the user equipment device and the visiting device by each respective network function, said private network contexts defining for each device a set of parameters which influence the interaction of each respective device with private content and/or services;
(ii) consulting one or more databases defined by the network functions to authenticate the user equipment device and visiting device and subsequently determine whether the user equipment device and visiting device are allowed to join their private contexts; and
   if they are allowed to join their private contexts,
(iii) setting up connections between the network functions on the server to join the private contexts of the user equipment device and visiting device and therewith allow interaction between said devices.

According to a preferred embodiment, at least one of the network functions automatically accepts interaction between the user equipment device and visiting device when it recognizes the visiting device in an established trusted pair with the user equipment device, therewith bypassing the step of authenticating.

According to another preferred embodiment, relationships between users of an online social network determine whether the visiting device and the user equipment device are allowed to join their private contexts.

According to yet another preferred embodiment, the step of controlling access further comprises translating the IP address of the visiting device and/or the user equipment device to avoid identical IP addresses are assigned to the user equipment devices and the visiting device. More specifically, there are two ways to deal with possible IP address overlap:
(i) either the relation between devices is known and non-conflicting addresses are handed out such that the devices that are allowed to communicate, will not have conflicting addresses. In this case, there is no IP translation, because overlap is avoided.
(ii) or overlap is allowed (or assumed) and all addresses are translated.

The invention further relates to a system for operating a user equipment device in a private network by a visiting device from outside the private network, comprising:
(i) a server comprising network functions, to which both the user equipment device and the visiting device are connected, said network functions comprising one or more databases in which private networks are defined as groups of predetermined user equipment devices;
(ii) server gateways, each configured to interconnect user equipment devices belonging to the same private network to emulate the private network, and to create and manage a private network context for both the user equipment device and the visiting device, said private network contexts defining for each device a set of parameters which influence the interaction of each respective device with private content and/or services; and
(iii) an interconnection processor, configured to consult one or more databases to authenticate the user equipment device and visiting device, to determine whether the user equipment device and visiting device are allowed to join their private contexts, and to set up connections between the network functions on the server to join the private contexts of the user equipment device and visiting device and therewith allow interaction between said devices.

In a preferred embodiment, the interconnection processor is further configured to automatically accept interaction between the user equipment device and visiting device when it recognizes the visiting device in an established trusted pair with the user equipment device.

In another preferred embodiment, the interconnection processor is further configured to consult relationships between users of an online social network to determine whether the visiting device and the user equipment device are allowed to join their private contexts.

In yet another preferred embodiment, the interconnection processor is further configured to translate the IP address of the visiting device and/or the user equipment device to avoid identical IP addresses are assigned to the user equipment devices and the visiting device.

Preferably, the server gateway is an access node or an access router for connecting user equipment devices to the network functions on the server.

Alternatively, in a preferred embodiment, the server gateway is an access point for connecting mobile user equipment devices to the network functions on the server.

Further, according to the invention there is provided a computer program product comprising computer-executable instructions for performing, when the program is run on a computer, the method for operating a user equipment device in a private network by a visiting device from outside the private network.

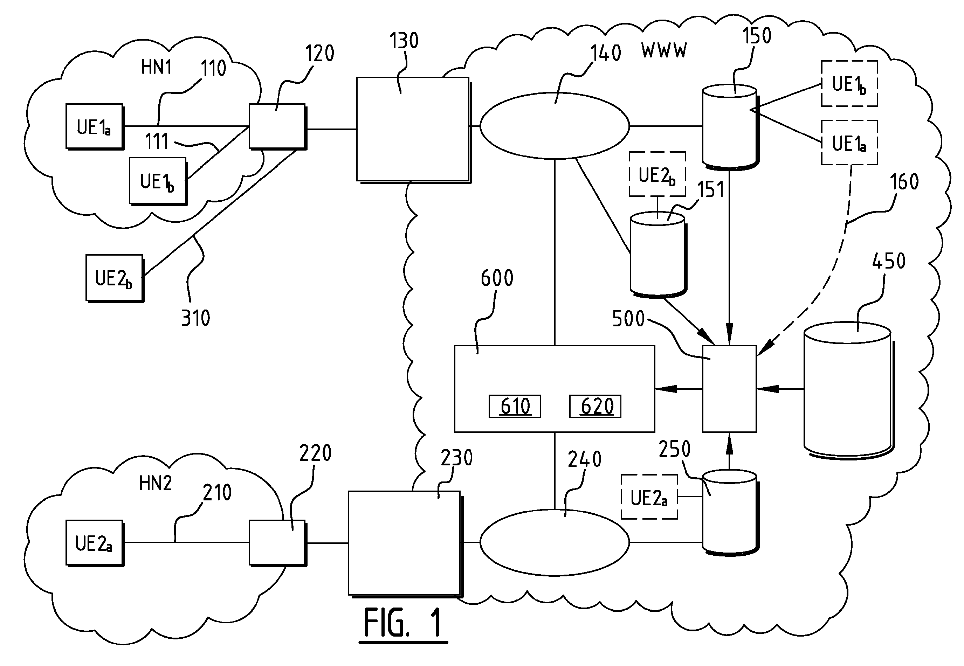

Further devices, features and advantages of the present invention are clarified in the following description of a preferred embodiment of the method and system according to the invention. Referring to the figure, which schematically illustrates an embodiment of the present invention, two private networks, HN1 and HN2 (Fig. 1), are shown. Each private network comprises user equipment devices and a private gateway for connecting to a server outside the private network. Examples of user equipment devices are personal computers, laptops, tablets, smart TVs, DLNA storage devices and home control systems. The figure shows two user equipment devices, UE1a and UE1b (Fig. 1), which are connected to the private side of the network HN1 by connecting to private gateway 120 through private connections 110 and 111. Similarly, user equipment device UE2a is connected to the private side of the private network HN2 by connecting to private gateway 220 through private connection 210. These private connections to the private gateways can either be wired or wireless (e.g. Wi-Fi) connections. Next to connecting to the private side of the network, user equipment devices can connect to the public side of the network via public SSID, which only allows direct communication to and from the Internet, but no communication with devices in the private network. This is illustrated in Fig. 1 by user equipment device UE2b, e.g. a mobile device of a user belonging to private network HN2, which is connected through public connection 310 to public side of private gateway 120.

More specifically, private gateways 120 and 220 allow to connect private networks HN1 and HN2 to respectively server gateways 130 and 230 via media that are common for connecting local area networks to wide area networks, such as DSL, cable, glass fibre or wireless links. Server gateways are typically access routers or access nodes, which provide private networks access to network functions on a server somewhere in the World Wide Web (WWW). Both server gateways 130 and 230 give access to databases defined by the network functions on the server. Server gateway 130 is connected to databases 150 and 151 and server gateway 230 provides access to database 250. These databases define connected private networks as groups of predetermined user equipment devices and optionally predetermined home services belonging to said network. Database 150 and 151 (Fig. 1) respectively comprise privately connected user equipment devices UE1a and UE1b and publicly connected user equipment device UE2b, and database 250 comprises privately connected user equipment device UE2a connected to private network HN2. Both server gateways 130 and 230 are further configured to respectively create and manage private network context 140 and 240, each defining for each user equipment device in the respective databases a set of parameters which influence the interaction of each respective device with private content and/or services. In addition, server gateways 130 and 230 are configured to join private network contexts 140 and 240 by means of a function 500 that decides whether user equipment devices belonging to different private network contexts are allowed to join their private network contexts. Its decision is based on the existence of pre-determined relationships between user equipment devices belonging to different databases. This information is stored in databases 150, 151 and 250 and communicated to the function 500, said communications being indicated by the arrows between the databases and the processor. In addition to known relationships between user equipment devices, also known relationships between users of an online social medium, shown as database 450, can be used as input information for the processor. Function 500 passes on its decision to a privacy bridge, indicated by 600, which comprises services such as protocol and privacy rules 610 and protocol translation service 620, which respectively determine for each user equipment device its permissions for communication and sharing data with other user equipment devices and translate the IP addresses of the participating user equipment devices to avoid identical IP addresses are assigned to user equipment devices belonging to different private networks. More specifically, there are two ways to deal with possible IP address overlap:
(i) either the function 500 knows the relation between devices and ensures that non-conflicting addresses are handed out such that the devices that are allowed to communicate, will not have conflicting addresses. In this case, there is no IP translation, because overlap is avoided.
(ii) or overlap is allowed (or assumed) and all addresses are translated by the privacy bridge 600.

In addition, access can be user controlled through one of the user equipment devices. For example, a user in a private network can manage profiles for visitors via its device, defining their access rights to user equipment devices in the host private network. This access control is indicated in Fig. 1 as input to the function 500 by the dashed arrow 160 between UE1a in database 150 and function 500.

In the process of allowing guest devices outside a host private network to operate user equipment devices in said host private network, e.g when a friend is visiting and bringing his laptop, the user equipment devices or private gateways identify themselves to their respective server gateways. At the server gateways, the user equipment devices or private gateways are authenticated at a Layer 2 level of the network so that the server gateways can setup and manage networking connections for the user equipment devices or private gateways. This is a standard procedure when connecting any device to the server. The server gateways according to the invention are configured to communicate with databases defined by network functions located somewhere at the server. These databases define private networks as groups of predetermined user equipment devices and optionally predetermined home services. Upon checking the database, the server gateways are provided to setup software defined networking service chains between the predetermined user equipment devices and optionally predetermined home services that are defined in the database. In this manner, private networks are emulated by software defined networking service chains that allow interconnected devices to communicate and share data and services, in a private manner without extra permissions, which are typically at Layer 3 of the network. Moreover, each server gateway creates and manages for each user equipment device in one of the private networks a private network context, which defines for each user equipment device a set of parameters that influence the interaction of each respective device with private content and/or home services. Because home services are outsourced to a network function on a server in the WWW, the private gateways do not need complex mechanisms and managing functions to manage home services and can be a simple networking device, such as a switch or bridge.

In the example of Fig. 1, user equipment devices UE1a and UE1b identify themselves to the server gateway 130. This identification allows the server gateway 130 to consult database 150 and to check whether user equipment device UE1a and UE1b are part of private network HN1 defined in database 150. In case the database consultation reveals that user equipment devices UE1a and UE1b are part of private network HN1, the server gateway 130 generates and manages private network context 140 for user equipment devices UE1a and UE1b. Each server gateway connecting user equipment devices to the network will retrieve from their respective databases, upon detection that the user equipment device is part of a private network, information relating to other user equipment devices that are part of that private network and/or private network context functionalities, such as home services. This information is used by the server gateway to interconnect the user equipment devices belonging to a single private network and to connect these user equipment devices to the network functions implementing the home services. Similarly, user equipment device UE2a identifies itself to the server gateway 230, which allows the server gateway 230 to consult database 250 to check whether the user equipment device UE2a is part of a private network defined in the database. If the database consultation reveals that the user equipment device UE2a is part of a private network, the server gateway 230 generates and manages a private network context 240 for each user equipment device in the database 250. In a private network context, network restrictions can be implemented based on information in the database. An example of implementing such network restriction is that internet access is only allowed via a predetermined service that e.g. implements parent control so that the network usage is restricted for the user.

In addition, server gateways 130 and 230 are further configured to join private network contexts 140 and 240 by means of a function 500 that decides whether user equipment devices belonging to different private network contexts are allowed to join their private network contexts. The function 500 passes on its decision to a privacy bridge, indicated by 600, which comprises services such as protocol and privacy rules 610 and protocol translation service 620, which respectively determine for each user equipment device its permissions for communication and sharing data with other user equipment devices and translate the IP addresses of the participating user equipment devices to avoid identical IP addresses are assigned to user equipment devices belonging to different private networks.

In the example of Fig. 1, joining private network contexts 140 and 240, via the function 500 and the privacy bridge 600, allows user equipment device UE2b, visiting private network HN1, to connect via a public connection 310 through the private gateway 130, which is part of the private network HN1, to a network function on the server, which retrieves visiting device UE2b in database 151, containing publicly connected user equipment devices, and automatically accepts interaction between UE2b and one or more user equipment devices connected to the private network HN1, when it recognizes UE2b in an established trusted pair with one or more user equipment devices of HN1, therewith bypassing the step of authenticating. A typical example of such communication could be sharing a picture stored on a hard drive belonging to private network HN2 with a friend's user equipment device, such as a smart TV, belonging to private network HN1.

According to one aspect of the embodiment shown in the figure, the function 500, which decides whether user equipment devices belonging to different private network contexts are allowed to join their private network contexts, can be controlled by a user of one of the user equipment devices belonging to one of the private networks. In Fig. 1, user equipment device UE1a, belonging to database 150 of privately connected user equipment devices in private network HN1, provides access control parameters to the function 500, indicated by the dashed arrow 160, which determines for each device that wants to connect to private network HN1, to what data and services they have access.

According to another aspect of the embodiment shown in the figure, predefined relationships between users of an online social network, indicated by database 450, could also serve as an input to the function 500 in determining which user equipment devices are allowed to join their private network contexts.

Although the figure illustrates emulation of only two private networks, it will be clear that a plurality of such private networks can be emulated in a similar manner. One server gateway can setup and manage multiple private network contexts for multiple respective user equipment devices.

A person skilled in the art would readily recognize that implementation of above-described embodiments can be realized by programmed computers. Herein, some embodiments are also intended to cover program storage devices, e.g., digital data storage media, which are machine or computer readable and encode machine-executable or computer-executable programs of instructions, wherein said instructions carry out some or all of the implementation steps needed to realize said above-described embodiments. The program storage devices may be, e.g., digital memories, magnetic storage media such as a magnetic disks and magnetic tapes, hard drives, or optically readable digital data storage media. The embodiments are also intended to cover computers programmed to perform said implementation steps of said above-described embodiment.

The description and drawings illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figure, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The present invention is not limited to the embodiments shown, but extends also to other embodiments falling within the scope of the appended claims.

## Claims

1. Method for operating a user equipment device in a private network by a visiting device from outside the private network, each device being connected via a server gateway to a network function on a common server outside the private network, comprising the steps of:
(i) creating and managing a private network context for both the user equipment device and the visiting device by each respective network function, said private network contexts defining for each device a set of parameters which influence the interaction of each respective device with private content and/or services;
(ii) consulting one or more databases defined by the network functions to authenticate the user equipment device and visiting device and subsequently determine whether the user equipment device and visiting device are allowed to join their private contexts; and
if they are allowed to join their private contexts,
(iii) setting up connections between the network functions on the server to join the private contexts of the user equipment device and visiting device and therewith allow interaction between said devices.

2. Method according to claim 1, wherein at least one of the network functions automatically accepts interaction between the user equipment device and visiting device when it recognizes the visiting device in an established trusted pair with the user equipment device, therewith bypassing the step of authenticating.

3. Method according to claim 1 or 2, wherein relationships between users of an online social network determine whether the visiting device and the user equipment device are allowed to join their private contexts.

4. Method according to any one of claims 1-3, wherein the step of controlling access further comprises translating the IP address of the visiting device and/or the user equipment device to avoid identical IP addresses are assigned to the user equipment devices and the visiting device.

5. System for operating a user equipment device in a private network by a visiting device from outside the private network, comprising:
(i) a server comprising network functions, to which both the user equipment device and the visiting device are connected, said network functions comprising one or more databases in which private networks are defined as groups of predetermined user equipment devices;
(ii) server gateways, each configured to interconnect user equipment devices belonging to the same private network to emulate the private network, and to create and manage a private network context for both the user equipment device and the visiting device, said private network contexts defining for each device a set of parameters which influence the interaction of each respective device with private content and/or services; and
(iii) an interconnection processor, configured to consult one or more databases to authenticate the user equipment device and visiting device, to determine whether the user equipment device and visiting device are allowed to join their private contexts, and to set up connections between the network functions on the server to join the private contexts of the user equipment device and visiting device and therewith allow interaction between said devices.

6. System according to claim 5, wherein the interconnection processor is further configured to automatically accept interaction between the user equipment device and visiting device when it recognizes the visiting device in an established trusted pair with the user equipment device.

7. System according to claim 5 or 6, wherein the interconnection processor is further configured to consult relationships between users of an online social network to determine whether the visiting device and the user equipment device are allowed to join their private contexts.

8. System according to any one of claims 5-7, wherein the interconnection processor is further configured to translate the IP address of the visiting device and/or the user equipment device to avoid identical IP addresses are assigned to the user equipment devices and the visiting device.

9. System according to any one of claims 5-8, wherein the server gateway is an access node or an access router for connecting user equipment devices to the network functions on the server.

10. System according to any one of claims 5-9, wherein the server gateway is an access point for connecting mobile user equipment devices to the network functions on the server.

11. A computer program product comprising computer-executable instructions for performing, when the program is run on a computer, the method according to any one of claims 1-4.
